# EUROPEAN PATENT APPLICATION

(11) **EP 4 741 364 A1**
(43) Date of publication of application: **13.05.2026**
(21) Application number: 25214945.5
(22) Date of filing: 11.11.2025
(51) Int. Cl.: C04B 35/05, C04B 35/484, C04B 35/657, C04B 35/08, C04B 35/634, C04B 35/64, C03B 5/00, C04B 35/626, C04B 35/482, C04B 35/109, C04B 35/106

(54) **HIGH ZIRCONIA BRICK, AND PREPARATION PROCESS AND USE THEREOF**

(30) Priority: 12.11.2024 CN 202411611037; 07.03.2025 CN 202510267486
(71) Applicant: Zhengzhou Fangming High-Temperature Ceramic New Material Co., Ltd., Goutang Town, Xinmi City Zhengzhou City, Henan Province (CN)
(72) Inventor: LIANG, Xinxing, Zhengzhou City (CN); LIU, Xiaogang, Zhengzhou City (CN); LIANG, Qixing, Zhengzhou City (CN); BA, Yali, Zhengzhou City (CN); ZHANG, Ning, Zhengzhou City (CN); LIU, Yalong, Zhengzhou City (CN); SHEN, Weifeng, Zhengzhou City (CN); GE, Mengzhen, Zhengzhou City (CN); WU, Yahui, Zhengzhou City (CN); FAN, Chongfang, Zhengzhou City (CN)
(74) Representative: Patent 42

(57) **Abstract**

The present application discloses a high zirconia brick and a preparation process and use thereof. The high zirconia brick can include the following components in percentage by weight: 40-99% of zirconia, 0.1-60% of alumina, and 0.1-40% of yttria, iron oxide, titania, magnesia, calcia, and silica in total. In the present application, heating and annealing cooling are controlled by means of curved temperature control, and a high zirconia brick prepared has uniform and segregation-free distribution of all elements and consistent overall density, without defects such as needle-like pores, bubble retention, and surface cavities. The high zirconia brick prepared by the technological method has features of short delivery cycles of products and customizable production

## Description

### TECHNICAL FIELD

The present disclosure relates to materials used in glass kilns, and specifically relates to a high zirconia brick and a preparation process and use thereof.

### BACKGROUND

Materials used in glass kilns roughly include sintered materials and fused-cast materials. Although a preparation process of sintered materials is relatively simple, the porosity is generally high (about 10-30%), which can easily cause problems such as bubbles and detachment of aggregates when used in glass kilns, resulting in defects such as bubbles and sand grains in glass products. Therefore, sintered materials are not suitable for critical parts to be in contact with high-temperature molten glass in glass kilns. Specifically, for high zirconia sintered materials with stabilizers such as Y₂O₃, MgO, and CaO added to prevent monoclinic crystal and regular crystal phase transition of zirconia at 900-1,200°C, the thermal expansion coefficient is relatively high, and is likely to cause thermal stress cracking in a heating process. Also, stabilizers may dissolve in molten glass in a high-temperature environment of glass kilns, causing stable zirconia to transform to an unstable state and continue phase transition, making a material structure fragile, and also causing defects such as sand grains in glass. Therefore, such type of material is not suitable for glass kilns.

Relatively speaking, fused-cast refractory materials are melted and fully homogenized in an electric furnace before being cast, cooled and solidified, and the obtained product has a dense structure and well-developed crystallization and is more suitable for use in glass kilns. Fused-cast materials having a high zirconia content have become preferred materials in glass melting kilns due to excellent corrosion resistance. Such materials are mainly divided into two types: Al₂O₃-ZrO₂-SiO₂ series fused cast refractory materials having a zirconia content of 33-41%; and high zirconia content series fused cast refractory materials having a high zirconia content of 80-95%. The latter has been widely used in high-quality glass kilns in recent years due to better corrosion resistance and low pollution to molten glass.

However, existing high zirconia series refractory materials still have some defects, such as a lower glass phase content compared to electrocast zirconia corundum (AZS), and due to a difference in a cooling rate during a casting process, part materials may exhibit a growth ring-like structure with high porosity, which may lead to problems such as foaming. In addition, large-scale application of the high zirconia series fused cast refractory materials is hindered by low yield, long delivery cycle, and high price. Also, significant differences in application results are caused due to poor thermal shock performance and industry quality control capabilities of fused cast high zirconia products. Therefore, the research and application of refractory materials used in glass kilns still require continuous exploration and innovation to meet the demand of the glass industry for high-quality and high-performance refractory materials.

### SUMMARY

An objective of the present disclosure is to provide a high zirconia brick and a preparation process and use thereof, to solve problems such as high manufacturing cost and poor thermal shock performance of existing high zirconia series fused cast refractory materials.

To achieve the objective, the present disclosure provides the following technical solutions:
According to a first aspect, the present disclosure provides a high zirconia brick, the high zirconia brick includes the following components in percentage by weight: 40-99% of zirconia, 0.1-60% of alumina, and 0.1-40% of yttria, iron oxide, titania, magnesia, calcia, and silica in total;
or the high zirconia brick includes the following components in percentage by weight: 40-99% of zirconia, 0.1-60% of magnesia, and 0.1-40% of yttria, iron oxide, titania, calcia, and silica in total;
or the high zirconia brick includes the following components in percentage by weight: 40-99% of zirconia, 0.1-60% of calcia, and 0.1-40% of magnesia, yttria, iron oxide, titania, and silica in total;
or the high zirconia brick includes the following components in percentage by weight: 40-99% of zirconia, 0.1-60% of chromia, and 0.1-40% of calcia, magnesia, yttria, iron oxide, titania, and silica in total;
or the high zirconia brick includes the following components in percentage by weight: 40-99% of zirconia, 0.1-60% of beryllia, and 0.1-40% of calcia, magnesia, yttria, iron oxide, titania, and silica in total.

According to a second aspect, the present disclosure provides a process for preparing a high zirconia brick, the preparation process including the following steps:
step 1: weighing and evenly mixing components, and allowing the components to react at 1,800-3,000°C for at least 45 min to form a molten liquid or a solid phase structure that is cooled to obtain a solid solution raw material;
step 2: grinding the solid solution raw material obtained in step 1 into a powder having a D50 value of 0.2-100 microns;
step 3: adding 0.1-5% of an organic binder or an inorganic binder to the powder obtained in step 2 and mixing the powder evenly;
step 4: placing the powder obtained in step 3 in a mold and pressing the powder for at least 15 s under a pressure of not less than 500 tons to form an initial blank;
step 5: heating the initial blank obtained in step 4 from room temperature to 1,600-1,950°C in at least 5 h by a temperature-controlled heating device, keeping the temperature at not lower than 1,600°C for at least 1 h, and then, lowering the temperature to room temperature in at least 5 h to obtain a high zirconia brick blank; and
step 6: grinding and trimming the brick blank obtained in step 5 to obtain the high zirconia brick.

As a specific solution in the technical solutions of the present disclosure, the mixed components in step 1 are melted at 1,800-3,000°C for at least 45 min and cooled to obtain a solid solution raw material containing evenly distributed elements; or, the mixed components are subjected to high-temperature liquid-phase reaction sintering at 1,800-3,000°C for at least 60 min and cooled to obtain a solid solution raw material containing evenly distributed elements.

As a specific solution in the technical solutions of the present disclosure, the organic binder in step 3 is selected from at least one of polyvinyl alcohol (PVA), polyethylene glycol (PEG), polyacrylamide (PAM), polyimide adhesive, epoxy adhesive, phenolic resin adhesive, and urea formaldehyde resin adhesive; and the inorganic binder includes, but is not limited to paraffin wax and plant ash.

As a specific solution in the technical solutions of the present disclosure, the powder obtained in step 3 is placed in a mold, and formed by cold isostatic pressing at a pressure of 500-10,000 tons or pressed at a pressure not less than 500 tons for at least 15 s to form an initial blank, and the mold includes, but is not limited to a rubber mold, a polyurethane mold, and a metal mold.

As a specific solution in the technical solutions of the present disclosure, the temperature-controlled heating device in step 5 uses a programmable temperature controller, and is set with a starting temperature of room temperature, a heating rate of 320-390°C/h, a heating time of at least 5 h, a final temperature of 1,600-1,950°C, and a holding time of at least 1 h.

As a specific solution in the technical solutions of the present disclosure, the temperature-controlled heating device includes, but is not limited to an electric heating device, an electromagnetic induction heating device, a vacuum heating device, a protective atmosphere heating device, a gas heating device, a plasma heating device, and a microwave heating device.

As a specific solution in the technical solutions of the present disclosure, a programmable temperature controller is used for cooling and annealing in step 5, and is set with a starting temperature of a furnace temperature, a cooling rate of 390-320°C/h, a cooling time of at least 5 h, and a final temperature of room temperature.

According to a third aspect, the present disclosure provides a use of the high zirconia brick for producing key ceramic products used in glass kilns, the ceramic products including, but are not limited to crucibles for special glass, high zirconia ceramic stirring paddles, high zirconia ceramic bricks, high zirconia wire-drawing crucibles, high zirconia shaped parts, and quartz furnaces.

Compared to the prior art, the present disclosure has the following beneficial effects: Appropriate raw materials of the components are selected based on different types and composition requirements of molten glass, to improve the optimal service life and cost performance of a high zirconia brick product. In the present disclosure, a process route for preparing the high zirconia brick is innovated, heating and annealing cooling are controlled by means of curved temperature control using the programmable temperature controller, and a high zirconia brick prepared has uniform and segregation-free distribution of all elements and consistent overall density, without defects such as needle-like pores, bubble retention, and surface cavities, and without risks of local corrosion and material leakage. The high zirconia brick prepared by the technological method according to the present disclosure has features of short delivery cycles of products and customizable production. The high zirconia brick has a stable liquid phase solidified structure under high temperature conditions, extremely low bubble precipitation rate, high corrosion resistance, excellent thermal shock resistance, and good thermal penetration progressive temperature decreasing performance, ensures safety in a kiln heating process, especially in a long-term working environment of 1,550°C or higher, and has more obvious advantages compared with fused cast AZS and fused cast 95 products. Moreover, in customized production, cost control can be achieved by controlling the components according to actual needs of customers, thereby matching different requirements of the customers for cost performance.

### BRIEF DESCRIPTION OF THE DRAWINGS

Fig. 1 is a flowchart of a preparation process of a high zirconia brick according to an example of the present disclosure;
Fig. 2 shows a microscopic image of a high zirconia brick sample according to an example of the present disclosure;
Fig. 3 shows a diagram of practice of thermal shock and thermal penetration of a high zirconia brick sample according to an example of the present disclosure;
Fig. 4 shows a english translation of test report of a linear expansion rate of a high zirconia brick sample according to an example of the present disclosure;
Fig. 5 shows a english translation of test report of a bubble precipitation rate at 1,300°C of a high zirconia brick sample according to an example of the present disclosure;
Fig. 6 shows a english translation of test report of a bubble precipitation rate at 1,500°C of a high zirconia brick sample according to an example of the present disclosure; and
Fig. 7 shows images of corrosion resistance test results of a crucible made of a high zirconia brick sample according to an example of the present disclosure, a crucible made of a 41# zirconia corundum brick, and a crucible made of a 95# fused cast high zirconia brick.

### DETAILED DESCRIPTION OF THE EMBODIMENTS

To make the objectives, technical solutions, and advantages of the present disclosure clearer, the technical solutions in the examples of the present disclosure will be clearly and completely described below with reference to the accompanying drawings. It is apparent that the described examples are merely part rather than all of the examples of the present disclosure. All other examples obtained by those of ordinary skill in the art based on the examples in the present disclosure without creative efforts shall fall within the protection scope of the present disclosure.

To solve the defects of high zirconia series refractory materials provided in the background art, this embodiment innovates a preparation process of a high zirconia brick product. Multiple compositions of high zirconia bricks are provided based on different types and composition requirements of molten glass, to improve the optimal service life and cost performance of a high zirconia brick product. For example, the present disclosure provides: a high zirconia brick includes the following components in percentage by weight: 40-99% of zirconia, 0.1-60% of alumina, and 0.1-40% of yttria, iron oxide, titania, magnesia, calcia, and silica in total; or the high zirconia brick comprises the following components in percentage by weight: 40-99% of zirconia, 0.1-60% of magnesia, and 0.1-40% of yttria, iron oxide, titania, calcia, and silica in total; or the high zirconia brick comprises the following components in percentage by weight: 40-99% of zirconia, 0.1-60% of calcia, and 0.1-40% of magnesia, yttria, iron oxide, titania, and silica in total; or the high zirconia brick comprises the following components in percentage by weight: 40-99% of zirconia, 0.1-60% of chromia, and 0.1-40% of calcia, magnesia, yttria, iron oxide, titania, and silica in total; or the high zirconia brick comprises the following components in percentage by weight: 40-99% of zirconia, 0.1-60% of beryllia, and 0.1-40% of calcia, magnesia, yttria, iron oxide, titania, and silica in total. To avoid defects such as element segregation, pores and bubbles that cannot be eliminated, uneven density, and surface microcracks in high zirconia brick products caused by a fused casting process, the present disclosure improves a preparation process of a high zirconia brick. First, evenly mixed components are allowed to react at 1,800-3,000°C for at least 45 min to form a molten liquid or a solid phase structure that is cooled to obtain an evenly distributed solid solution raw material. Specifically, the mixed components are melted at 1,800-3,000°C for at least 45 min and cooled to obtain the solid solution raw material containing evenly distributed elements; or, the mixed components are subjected to high-temperature liquid-phase reaction sintering at 1,800-3,000°C for at least 60 min and cooled to obtain a solid solution raw material containing evenly distributed elements. The solid solution raw material obtained is ground into a powder having a D50 value of 0.2-100 microns. 0.1-5% of an organic binder or an inorganic binder is added to the powder obtained and the powder is mixed evenly. The powder is pressed in a mold for at least 15 s under a pressure of not less than 500 tons to form an initial blank. The initial blank is heated from room temperature to 1,600-1,950°C in at least 5 h by a temperature-controlled heating device, and the temperature is kept at not lower than 1,600°C for at least 1 h, and then lowered to room temperature in at least 5 h to obtain a high zirconia brick blank. The high zirconia brick blank is ground and trimmed to obtain the high zirconia brick.

In a specific implementation process of the present disclosure, the organic binder is selected from at least one of polyvinyl alcohol (PVA), polyethylene glycol (PEG), polyacrylamide (PAM), polyimide adhesive, epoxy adhesive, phenolic resin adhesive, and urea formaldehyde resin adhesive; and the inorganic binder includes, but is not limited to paraffin wax and plant ash. The powder with the binder added is placed in a mold, and formed by cold isostatic pressing at a pressure of 500-10,000 tons or pressed at a pressure not less than 500 tons for at least 15 s to form an initial blank, and the mold is selected from a plurality of types of molds, including, but are not limited to a rubber mold, a polyurethane mold, and a metal mold. The temperature-controlled heating device uses a programmable temperature controller, and is set with a starting temperature of room temperature, a heating rate of 320-390°C/h, a heating time of at least 5 h, a final temperature of 1,600-1,950°C, and a holding time of at least 1 h. A programmable temperature controller is used for cooling and annealing, and is set with a starting temperature of a furnace temperature, a cooling rate of 390-320°C/h, a cooling time of at least 5 h, and a final temperature of room temperature. The temperature-controlled heating device includes, but is not limited to an electric heating device, an electromagnetic induction heating device, a vacuum heating device, a protective atmosphere heating device, a gas heating device, a plasma heating device, and a microwave heating device. In a specific implementation process, the temperature-controlled heating device performs heating, cooling and annealing on the initial blank of the high zirconia brick by means of curved temperature control, to control development of zirconia grains and annealing, and the produced high zirconia brick product has uniform and segregation-free distribution of all elements and consistent overall density, without defects such as needle-like pores, bubble retention, and surface cavities, and without local corrosion and material leakage. Therefore, the high zirconia brick prepared by the technological method according to the present disclosure has features of short delivery cycles of products and customizable production. The high zirconia brick prepared according to the present disclosure is used for producing key ceramic products used in glass kilns, the ceramic products including, but are not limited to crucibles for special glass, high zirconia ceramic stirring paddles, high zirconia ceramic bricks, high zirconia wire-drawing crucibles, high zirconia shaped parts, and quartz furnaces.

### Example

This embodiment selects the following raw material components in percentage by mass: 77% of zirconia, 17% of alumina, and 5% of yttria, titania, calcia, magnesia, and silica in total, with 0.4% of silica by weight, 0.1% of titania by weight, and 0.1% of calcia by weight.

Step 1: the components were weighed in proportion to reach a total mass of 5,000 g, mixed evenly, melted at 1,900°C for 60 min, and then cooled to obtain a solid solution raw material containing evenly distributed elements.

Step 2: the solid solution raw material containing evenly distributed elements obtained in step 1 was ground into a powder having a D50 value of 0.2-20 microns.

Step 3: 3% of a polyvinyl alcohol (PVA) organic binder was added to the powder obtained in step 2 and the powder was mixed evenly.

Step 4: the powder obtained in step 3 was placed in a metal mold and pressed by cold isostatic pressing for 20 s under a pressure of 600 tons to form an initial blank.

Step 5: the initial blank obtained in step 4 was put into a curved temperature controller of an electromagnetic induction heating device and heated at room temperature to 1,950°C in 5 h at a rate of 320°C/h, and the temperature was kept at 1,950°C for 2 h and then lowered from 1,950°C to room temperature in 6 h at a rate of 320°C/h to obtain a high zirconia brick blank.

Step 6: the brick blank obtained in step 5 was ground and trimmed to obtain a high zirconia brick sample.

### Test of element distribution of high zirconia brick sample

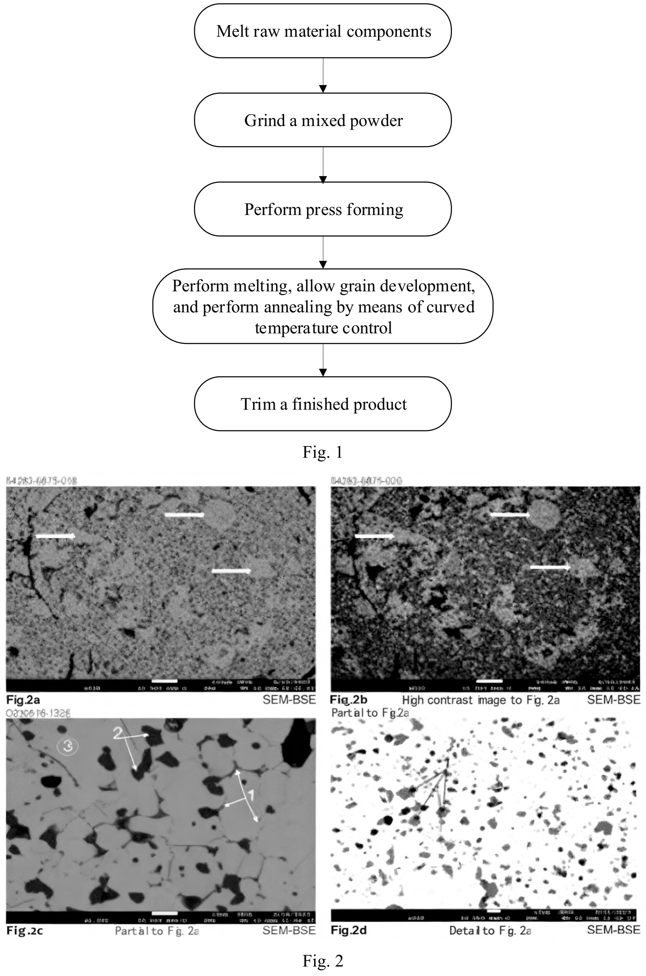

The high zirconia brick sample prepared in Example 1 was entrusted to a German professional testing agency for testing element distribution. Fig. 2 is a microscopic image of the high zirconia brick sample. The areas indicated by the white arrows can be clearly seen, and the areas exhibit dense and highly dispersed particle distribution. The particles are mainly zirconia (ZrO₂), and the ZrO₂ particles are cleverly embedded in a matrix material to form a compact and stable bond, ensure stable existence of the ZrO₂ particles in the matrix, and effectively avoid the problem of reduction of a stabilization rate by a stable phase. Not only the overall strength and toughness of the high zirconia brick is enhanced, but also the application prospect of a monoclinic zirconia crystal form is broadened.

### Practice and test of thermal shock and heat penetration

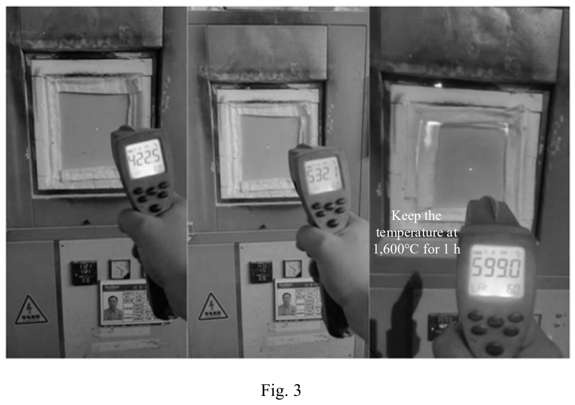

The high zirconia brick produced in Example 1 was subjected to a thermal shock and thermal penetration test using a box-type high-temperature furnace FM1800 device. First, the high zirconia brick was trimmed to dimensions of 320 mm in length, 310 mm in width, and 70 mm in thickness. Then, one side of the high zirconia brick was heated to 1,600°C at a rate of 40°C/h in 40 h. Afterward, the high zirconia brick was kept at 1,600°C for 4 h while the other side was exposed to room temperature. The temperature of the other side exposed to room temperature was tested to evaluate the thermal shock performance and thermal penetration performance, as shown in Fig. 3. The following Table 1 shows the temperature changes of the other side exposed to room temperature and whether there are cracks on the surface during the process of heating one side of the high zirconia brick.

**Table 1 Temperature change statistics**

| Time | Furnace temperature/°C | Temperature on one side of high zirconia brick sample exposed to room temperature | Whether there are cracks and the conditions of cracks on the outer surface of a ceramic brick |
|---|---|---|---|
| 0 h | 28 | 28 | No |
| 4 h | 188 | 55 | No |
| 8 h | 320 | 91 | No |
| 12 h | 483 | 166 | No |
| 16 h | 640 | 246 | No |
| 20 h | 801 | 307 | No |
| 24 h | 960 | 363 | No |
| 28 h | 1,120 | 422 | No |
| 32 h | 1,282 | 470 | No |
| 36 h | 1,442 | 530 | No |
| 38 h | 1,600 | 592 | No |
| 40 h | 1,600 | 599 | No |

The thermal shock process of this experiment was carried out from room temperature of 29°C to 1,600°C in 40 h, with a holding time of 4 h. During the heating process, there were no abnormal changes or cracks observed on the inner and outer surfaces of the high zirconia brick. When the temperature inside the furnace was 1,600°C, the other side of the high zirconia brick exposed to the air was tested to be 600°C, with a thermal penetration temperature difference of 1,000°C, reaching a progressive temperature decrease of 14°C per 1 millimeter. Thus, the high zirconia brick has excellent thermal shock resistance and good thermal penetration temperature decreasing performance.

### Test of linear expansion rate

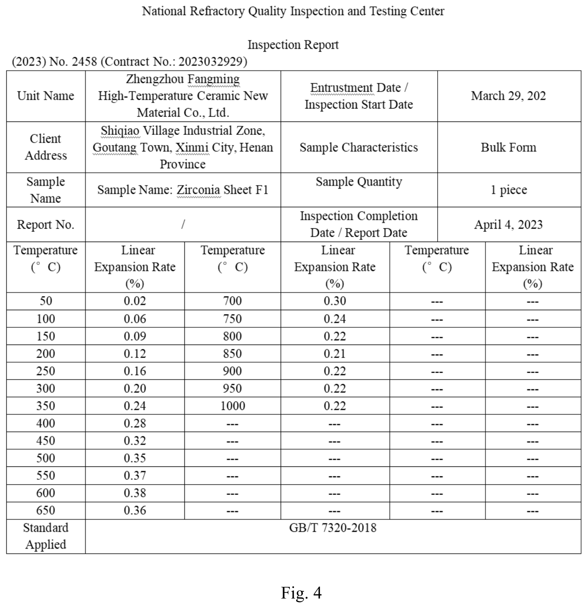

The high zirconia brick sample produced in Example 1 was entrusted to the National Refractory Quality Inspection and Testing Center for testing the linear expansion rate. As shown in Fig. 4, the linear expansion rate of the high zirconia brick increases continuously from 0.02% to 0.38% at 50-600°C, decreases continuously from 0.36% to 0.22% at 650-1,000°C, and reaches 0.73% at 1,400°C. Under the same conditions, the linear expansion rate of fused cast AZS 41# at 100-1,000°C is 4.23-0.81% in an increasing manner. From the comparison data between the high zirconia brick and the fused cast AZS 41# in Table 2, it can be seen that the high zirconia brick has an expansion rate almost the same as that of the AZS 41# at an operating temperature, but has a low probability of cracking in preheating and thermal shock processes, thereby ensuring the safety of a kiln heating process.

**Table 2 Comparison of linear expansion data**

| | Fused cast ASZ41# | High zirconia brick sample |
|---|---|---|
| 50-600°C | 4.23 | 0.02-0.38 |
| 650-1,000°C | 0.81 | 0.36-0.22 |
| 1,400°C | 0.76 | 0.73 |

### Test of bubble precipitation

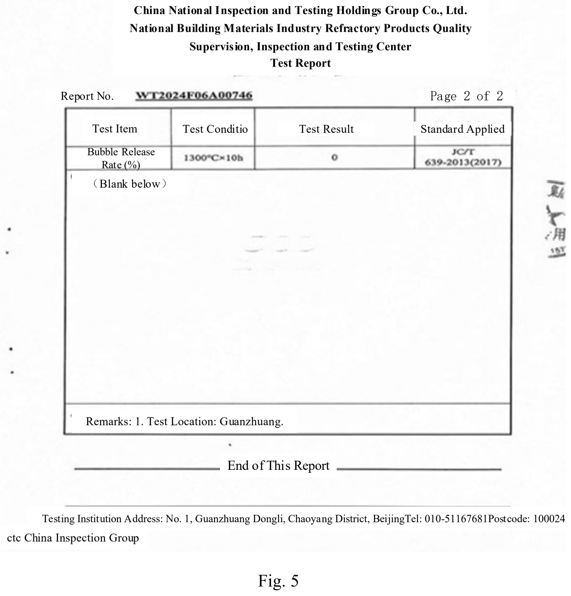

The high zirconia brick sample produced in Example 1 was entrusted to the National Building Materials Industry Refractory Product Quality Supervision and Inspection Testing Center for testing bubble precipitation, and the test report is shown in Figs. 5-6. According to the test report, the high zirconia brick has a bubble precipitation rate of 0 at 1,300°C, and a bubble precipitation rate of 0.1 at 1,500°C. Table 3 shows the comparison data in the bubble precipitation rate between the high zirconia brick, the AZS 41, and fused cast 95. According to data analysis from the National Inspection Center over the years, the bubble precipitation rate of the fused cast AZS is 1-1.2 (differences were caused due to sampling locations with element segregation, and the bubble precipitation rate gradually increased due to a glass phase leakage factor after long-term use); and the bubble precipitation rate of the fused cast 95 high zirconia is 26.50 (excessive release was caused due to carbon retention in the early stage, and the bubble precipitation rate gradually decreased in the later stage). From the comparation data, it can be seen that the high zirconia brick has a good suppression effect on bubble defects caused by glass kiln materials. Due to uniform and consistent elements and density, and the absence of phase structural changes, the high zirconia brick always has extremely low bubble precipitation data and remains stable.

**Table 3 Comparison data of bubble precipitation rate**

| | High zirconia brick sample | Fused cast ASZ41# | Fused cast 95 |
|---|---|---|---|
| 1,300°C | 0 | 1-1.2 | 26.5 |
| 1,500°C | 0.1 | Not tested | Not tested |

### Test of corrosion resistance

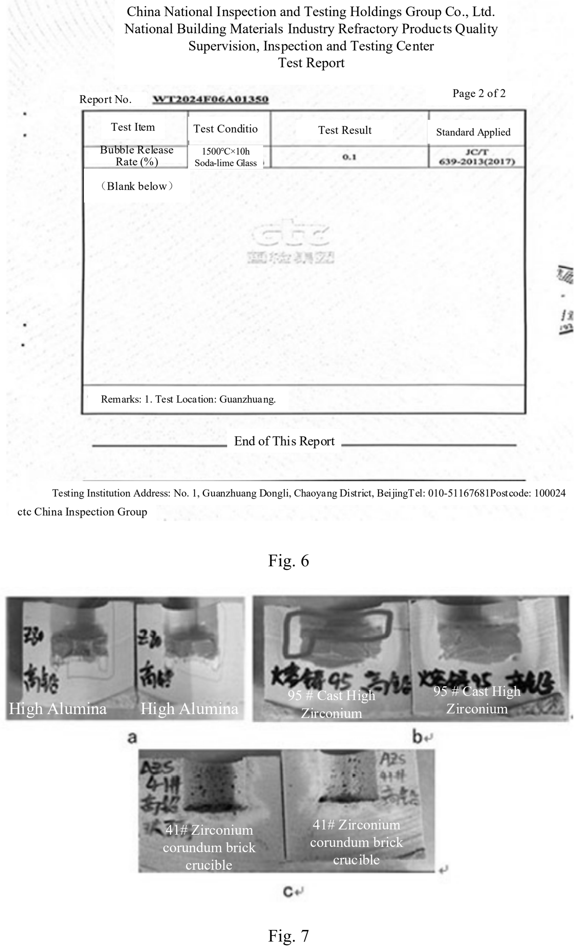

This test performs a comparative experiment on corrosion resistance of a crucible made of the high zirconia brick sample prepared in Example 1, a crucible made of a 41# zirconia corundum brick, and a crucible made of a 95# fused cast high zirconia brick. High lead glass (corrosive medium) was added to the crucibles, and a static crucible method was used as the test method, with an experimental temperature of 1,600°C and a holding time of 36 h. From Fig. 7c, precipitation of silica inside the 41# zirconia corundum brick crucible can be observed, and the brick surface and crucible hole are infiltrated by glass, causing honeycomb pores. From Fig. 7b, an approximately 1 mm hole expansion is observed at the liquid level of the fused cast 95# high zirconia brick, a color change of about 5 mm in depth towards the interior of the brick is observed, and the remaining glass is turbid, indicating possible component displacement. The crucible made of the high zirconia brick sample prepared in Example 1 has a hole expansion of about 0.5 mm at the liquid level of the high zirconia brick (as shown in Fig. 7a), there is no significant color change at the contact position with the high lead glass, and the remaining glass is relatively transparent, indicating that the high zirconia brick prepared in this example has excellent corrosion resistance.

Although the examples of the present disclosure have been illustrated and described above, it can be understood by those of ordinary skill in the art that many changes, modifications, substitutions, and variations can be made to these examples without departing from the principle and spirit of the present disclosure, and the scope of the present disclosure is limited by the appended claims and equivalents thereof.

## Claims

1. A high zirconia brick, wherein the high zirconia brick comprises the following components in percentage by weight: 40-99% of zirconia, 0.1-60% of alumina, and 0.1-40% of yttria, iron oxide, titania, magnesia, calcia, and silica in total;
or the high zirconia brick comprises the following components in percentage by weight: 40-99% of zirconia, 0.1-60% of magnesia, and 0.1-40% of yttria, iron oxide, titania, calcia, and silica in total;
or the high zirconia brick comprises the following components in percentage by weight: 40-99% of zirconia, 0.1-60% of calcia, and 0.1-40% of magnesia, yttria, iron oxide, titania, and silica in total;
or the high zirconia brick comprises the following components in percentage by weight: 40-99% of zirconia, 0.1-60% of chromia, and 0.1-40% of calcia, magnesia, yttria, iron oxide, titania, and silica in total;
or the high zirconia brick comprises the following components in percentage by weight: 40-99% of zirconia, 0.1-60% of beryllia, and 0.1-40% of calcia, magnesia, yttria, iron oxide, titania, and silica in total.

2. A process for preparing the high zirconia brick according to claim 1, wherein the preparation process comprises the following steps:
step 1: weighing and evenly mixing components, and allowing the components to react at 1,800-3,000°C for at least 45 min to form a molten liquid or a solid phase structure that is cooled to obtain a solid solution raw material;
step 2: grinding the solid solution raw material obtained in step 1 into a powder having a D50 value of 0.2-100 microns;
step 3: adding 0.1-5% of an organic binder or an inorganic binder to the powder obtained in step 2 and mixing the powder evenly;
step 4: placing the powder obtained in step 3 in a mold and pressing the powder for at least 15 s under a pressure of not less than 500 tons to form an initial blank;
step 5: heating the initial blank obtained in step 4 from room temperature to 1,600-1,950°C in at least 5 h by a temperature-controlled heating device, keeping the temperature at not lower than 1,600°C for at least 1 h, and then, lowering the temperature to room temperature in at least 5 h to obtain a high zirconia brick blank; and
step 6: grinding and trimming the brick blank obtained in step 5 to obtain the high zirconia brick.

3. The preparation process according to claim 2, wherein the mixed components in step 1 are melted at 1,800-3,000°C for at least 45 min and cooled to obtain a solid solution raw material containing evenly distributed elements; or, the mixed components are subjected to high-temperature liquid-phase reaction sintering at 1,800-3,000°C for at least 60 min and cooled to obtain a solid solution raw material containing evenly distributed elements.

4. The preparation process according to claim 2, wherein the organic binder in step 3 is selected from at least one of polyvinyl alcohol (PVA), polyethylene glycol (PEG), polyacrylamide (PAM), polyimide adhesive, epoxy adhesive, phenolic resin adhesive, and urea formaldehyde resin adhesive; and the inorganic binder comprises, but is not limited to paraffin wax and plant ash.

5. The preparation process according to claim 2, wherein the powder obtained in step 3 is placed in a mold, and formed by cold isostatic pressing at a pressure of 500-10,000 tons or pressed at a pressure not less than 500 tons for at least 15 s to form an initial blank.

6. The preparation process according to claim 2, wherein the mold comprises, but is not limited to a rubber mold, a polyurethane mold, and a metal mold.

7. The preparation process according to claim 2, wherein the temperature-controlled heating device in step 5 uses a programmable temperature controller, and is set with a starting temperature of room temperature, a heating rate of 320-390°C/h, a heating time of at least 5 h, a final temperature of 1,600-1,950°C, and a holding time of at least 1 h.

8. The preparation process according to claim 7, wherein the temperature-controlled heating device comprises, but is not limited to an electric heating device, an electromagnetic induction heating device, a vacuum heating device, a protective atmosphere heating device, a gas heating device, a plasma heating device, and a microwave heating device.

9. The preparation process according to claim 2, wherein a programmable temperature controller is used for cooling and annealing in step 5, and is set with a starting temperature of a furnace temperature, a cooling rate of 390-320°C/h, a cooling time of at least 5 h, and a final temperature of room temperature.

10. A use of the high zirconia brick according to any one of claim 1, for producing key ceramic products used in glass kilns, the ceramic products comprising, but are not limited to crucibles for special glass, high zirconia ceramic stirring paddles, high zirconia ceramic bricks, high zirconia wire-drawing crucibles, high zirconia shaped parts, and quartz furnaces.
